# EUROPEAN PATENT SPECIFICATION

(11) **EP 2 676 512 B1**
(45) Date of publication and mention of the grant of the patent: **18.03.2020**
(21) Application number: 12707416.9
(22) Date of filing: 13.02.2012
(51) Int. Cl.: H04W 72/08, H04W 88/08, H04W 72/04

(54) **SELECTING ANTENNA PORTS FOR REFERENCE SIGNAL BASED ON MOBILITY AND CSI FEEDBACK IN WIRELESS NETWORKS WITH DISTRIBUTED REMOTE RADIO HEADS**
AUSWAHL VON ANTENNENPORTS FÜR REFERENZSIGNALE BASIEREND AUF MOBILITÄT UND-CSI RÜCKKOPPLUNG IN DRAHTLOSEN NETZWERKEN MIT VERTEILTEN REMOTE-FUNKKÖPFEN
SÉLECTION D'ANTENNES POUR UN SIGNAL DE RÉFÉRENCE SUR LA BASE DE LA MOBILITÉ ET DE LA RÉTROACTION CSI DANS DES RÉSEAUX SANS FIL COMPORTANT DES SOURCES RADIO EXISTANTES DISTRIBUÉES

(30) Priority: 14.02.2011 US 201161442641 P; 11.02.2012 US 201213371407
(43) Date of publication of application: 25.12.2013
(73) Proprietor: Qualcomm Incorporated, San Diego, CA 92121-1714 (US)
(72) Inventor: LUO, Xiliang, San Diego, California 92121 (US); XU, Hao, San Diego, California 92121 (US); CHEN, Wanshi, San Diego, California 92121 (US); JI, Tingfang, San Diego, California 92121 (US); GAAL, Peter, San Diego, California 92121 (US); MONTOJO, Juan, San Diego, California 92121 (US)
(74) Representative: Dunlop, Hugh Christopher
(86) International application number: PCT/US2012/024896
(87) International publication number: WO 2012/112455

(56) References cited:
- WO-A1-2011/016560
- US-A1- 2011 034 175
- MOTOROLA SOLUTIONS: "Proposals for consideration for CoMP enhancements", 3GPP DRAFT; R1-110291, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Dublin, Ireland; 20110117, 13 January 2011 (2011-01-13), XP050490370, [retrieved on 2011-01-13]
- SAMSUNG: "Remaining Issues on CSI-RS Transmission", 3GPP DRAFT; R1-105377 REMAINING ISSUES ON CSI-RS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Xi'an; 20101011, 5 October 2010 (2010-10-05), XP050450526, [retrieved on 2010-10-05]
- PRAKASH BHAT ET AL: "LTE-advanced: an operator perspective", IEEE COMMUNICATIONS MAGAZINE, IEEE SERVICE CENTER, PISCATAWAY, US, vol. 50, no. 2, 1 February 2012 (2012-02-01), pages 104-114, XP011417046, ISSN: 0163-6804, DOI: 10.1109/MCOM.2012.6146489
- ERICSSON: "Baseline Schemes and Focus of CoMP Studies", 3GPP DRAFT; R1-110461_COMP_HIGH_LEVEL, 3RD GENERATION PARTNERSHIP PROJECT (3GPP), SOPHIA-ANTIPOLIS CEDEX ; FRANCE, 12 January 2011 (2011-01-12), XP050490347, [retrieved on 2011-01-12]
- ZTE: "Views on Rel-11 CoMP", 3GPP DRAFT; R1-110573, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Dublin, Ireland; 20110117, 21 January 2011 (2011-01-21), XP050490430, [retrieved on 2011-01-21]

## Description

### Field

Certain aspects of the disclosure generally relate to wireless communications and, more particularly, to techniques for supporting mobility procedures in wireless networks with multiple distributed remote radio heads (RRHs).

### Background

Wireless communication systems are widely deployed to provide various telecommunication services such as telephony, video, data, messaging, and broadcasts. Typical wireless communication systems may employ multiple-access technologies capable of supporting communication with multiple users by sharing available system resources (e.g., bandwidth, transmit power). Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems.

These multiple access technologies have been adopted in various telecommunication standards to provide a common protocol that enables different wireless devices to communicate on a municipal, national, regional, and even global level. An example of an emerging telecommunication standard is Long Term Evolution (LTE). LTE is a set of enhancements to the Universal Mobile Telecommunications System (UMTS) mobile standard promulgated by Third Generation Partnership Project (3GPP). It is designed to better support mobile broadband Internet access by improving spectral efficiency, lower costs, improve services, make use of new spectrum, and better integrate with other open standards using OFDMA on the downlink (DL), SC-FDMA on the uplink (UL), and multiple-input multiple-output (MIMO) antenna technology. However, as the demand for mobile broadband access continues to increase, there exists a need for further improvements in LTE technology. Preferably, these improvements should be applicable to other multi-access technologies and the telecommunication standards that employ these technologies. For example, 3GPP draft document R1-110291, "Proposals for consideration for CoMP enhancements" by Motorola Solutions discusses deployment scenario and feedback enhancements for CoMP operation in LTE networks. 3GPP discussion and decision document R1-110461, "Baseline Schemes and Focus of CoMP Studies" by Ericsson, ST-Ericsson outlines baseline schemes in support for CoMP. WO2011/016560 A1 describes a wireless communication system and method in which a cooperating set is automatically configured in such a manner that does not add any cells that do not support CoMP. US 2011/0034175 A1 describes a method for implementing coordinated multi-point transmission and reception in a multi-carrier network system. 3GPP discussion and decision document R1-110573, "Views on Rel-11 CoMP" by ZTE provides views in different CoMP aspects for further study.

### SUMMARY

The present invention is defined in the appended set of claims. Certain aspects of the present disclosure provide a method for wireless communications. The method generally includes receiving channel state information (CSI) feedback from a user equipment (UE), based on the CSI feedback, selecting one or more antenna ports for transmitting reference signals (RSs), wherein the one or more antenna ports are at least antenna ports of a base station (BS) or antenna ports of remote radio heads (RRHs) under control of the BS; and determining whether to update the selection of the one or more antenna ports based at least in part on a change in location or a mobility of the UE.

Certain aspects provide an apparatus for wireless communications. The apparatus generally includes logic for receiving CSI feedback from a UE, based on the CSI feedback, logic for selecting one or more antenna ports for transmitting RSs, wherein the one or more antenna ports are at least antenna ports of a BS or antenna ports of RRHs under control of the BS, and logic for determining whether to update the selection of the one or more antenna ports based at least in part on a change in location or a mobility of the UE.

Certain aspects provide an apparatus for wireless communications. The apparatus generally includes means for receiving CSI feedback from a UE, based on the CSI feedback, means for selecting one or more antenna ports for transmitting RSs, wherein the one or more antenna ports are at least antenna ports of a BS or antenna ports of RRHs under control of the BS, and means for determining whether to update the selection of the one or more antenna ports based at least in part on a change in location or a mobility of the UE.

Certain aspects provide a computer-program product for wireless communications, comprising a computer-readable medium having instructions stored thereon, the instructions being executable by one or more processors. The instructions generally include instructions for receiving CSI feedback from a UE, based on the CSI feedback, instructions for selecting one or more antenna ports for transmitting RSs, wherein the one or more antenna ports are at least antenna ports of a BS or antenna ports of RRHs under control of the BS, and instructions for determining whether to update the selection of the one or more antenna ports based at least in part on a change in location or a mobility of the UE.

### BRIEF DESCRIPTION OF THE DRAWINGS

FIG. 1 is a diagram illustrating an example of a hardware implementation for an apparatus employing a processing system, in accordance with certain aspects of the present disclosure.
FIG. 2 is a diagram illustrating an example of a network architecture, in accordance with certain aspects of the present disclosure.
FIG. 3 is a diagram illustrating an example of an access network, in accordance with certain aspects of the present disclosure.
FIG. 4 is a diagram illustrating an example of a frame structure for use in an access network, in accordance with certain aspects of the present disclosure.
FIG. 5 shows an exemplary format for the UL in LTE, in accordance with certain aspects of the present disclosure.
FIG. 6 is a diagram illustrating an example of a radio protocol architecture for the user and control plane, in accordance with certain aspects of the present disclosure.
FIG. 7 is a diagram illustrating an example of an evolved Node B and user equipment in an access network, in accordance with certain aspects of the present disclosure.
FIG. 8 illustrates a network having a macro node and a number of remote radio heads (RRHs), in accordance with certain aspects of the present disclosure.
FIG. 9 illustrates two logical cells, wherein RRHs may be distributed in different locations throughout the logical cells, in accordance with certain aspects of the present disclosure.
FIG. 10 illustrates RRHs transmitting on one or more cell-specific reference signal (CRS) antenna ports, in accordance with certain aspects of the present disclosure.
FIG. 11 illustrates all CRS antenna ports formed with transmit antennas at a macro eNB, in accordance with certain aspects of the present disclosure.
FIG. 12 illustrates an example channel state information RS (CSI-RS) configuration for RRHs, in accordance with certain aspects of the present disclosure.
FIG. 13 illustrates an example of the mobility of a user equipment (UE) within a cell and between multiple cells, in accordance with certain aspects of the present disclosure.
FIG. 14 illustrates example operations for supporting mobility procedures in wireless networks with multiple RRHs, in accordance with certain aspects of the present disclosure.
FIG. 14A illustrates example components capable of performing the operations illustrated in FIG. 14.
FIG. 15 illustrates an example of the mobility of a Rel-11 (and beyond) UE within a logical cell, wherein the UE is configured with a large number of CSI-RS antenna ports, in accordance with certain aspects of the present disclosure.

### DETAILED DESCRIPTION

Wireless networks may include remote radio heads (RRHs) for extending the coverage of a macro cell. The macro cell may be connected to the RRHs, for example, by optical fiber, and there may be negligible latency between the macro cell and the RRHs. As a user equipment (UE) moves within the macro cell, or between other macro cells, mobility procedures followed by the UE may vary based on the release of the UE (e.g., Rel-8/9, Rel-10, or Rel-11 and beyond). The macro cell may handle all the scheduling within the cell, for itself and the RRHs.

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

Several aspects of telecommunication systems will now be presented with reference to various apparatus and methods. These apparatus and methods will be described in the following detailed description and illustrated in the accompanying drawing by various blocks, modules, components, circuits, steps, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented with a "processing system" that includes one or more processors. Examples of processors include microprocessors, microcontrollers, digital signal processors (DSPs), field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise. The software may reside on a computer-readable medium. The computer-readable medium may be a non-transitory computer-readable medium. A non-transitory computer-readable medium include, by way of example, a magnetic storage device (e.g., hard disk, floppy disk, magnetic strip), an optical disk (e.g., compact disk (CD), digital versatile disk (DVD)), a smart card, a flash memory device (e.g., card, stick, key drive), random access memory (RAM), read only memory (ROM), programmable ROM (PROM), erasable PROM (EPROM), electrically erasable PROM (EEPROM), a register, a removable disk, and any other suitable medium for storing software and/or instructions that may be accessed and read by a computer. The computer-readable medium may be resident in the processing system, external to the processing system, or distributed across multiple entities including the processing system. The computer-readable medium may be embodied in a computer-program product. By way of example, a computer-program product may include a computer-readable medium in packaging materials. Those skilled in the art will recognize how best to implement the described functionality presented throughout this disclosure depending on the particular application and the overall design constraints imposed on the overall system.

Accordingly, in one or more exemplary embodiments, the functions described may be implemented in hardware, software, firmware, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media.

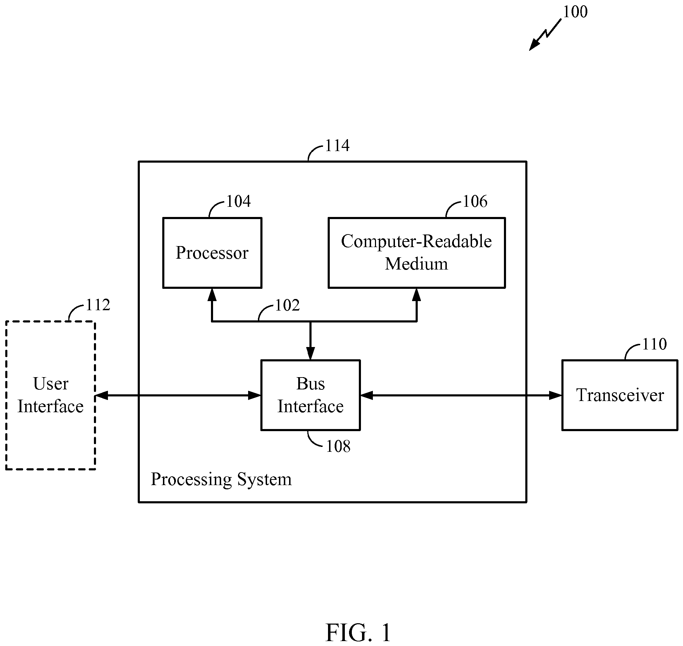

FIG. 1 is a conceptual diagram illustrating an example of a hardware implementation for an apparatus 100 employing a processing system 114. In this example, the processing system 114 may be implemented with a bus architecture, represented generally by the bus 102. The bus 102 may include any number of interconnecting buses and bridges depending on the specific application of the processing system 114 and the overall design constraints. The bus 102 links together various circuits including one or more processors, represented generally by the processor 104, and computer-readable media, represented generally by the computer-readable medium 106. The bus 102 may also link various other circuits such as timing sources, peripherals, voltage regulators, and power management circuits, which are well known in the art, and therefore, will not be described any further. A bus interface 108 provides an interface between the bus 102 and a transceiver 110. The transceiver 110 provides a means for communicating with various other apparatus over a transmission medium. Depending upon the nature of the apparatus, a user interface 112 (e.g., keypad, display, speaker, microphone, joystick) may also be provided.

The processor 104 is responsible for managing the bus 102 and general processing, including the execution of software stored on the computer-readable medium 106. The software, when executed by the processor 104, causes the processing system 114 to perform the various functions described *infra* for any particular apparatus. The computer-readable medium 106 may also be used for storing data that is manipulated by the processor 104 when executing software.

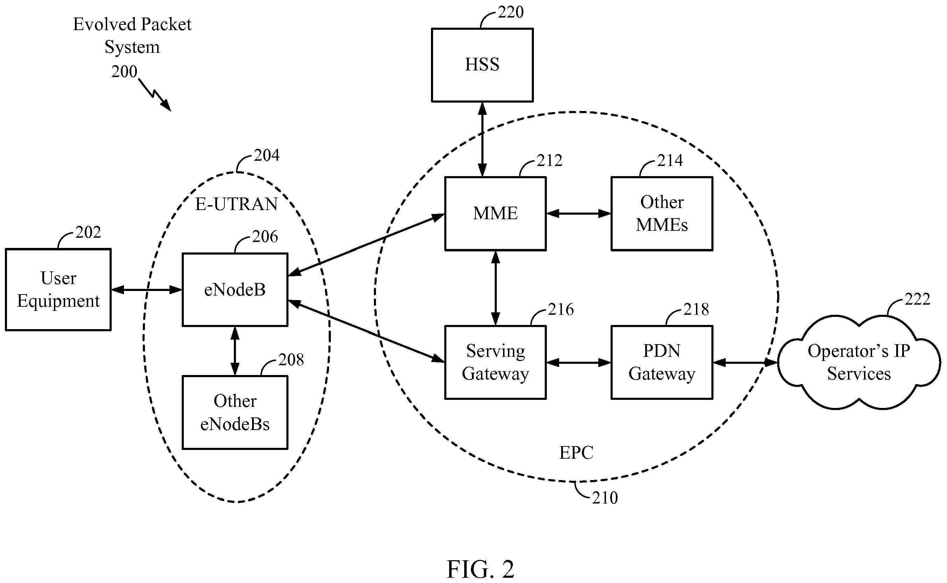

FIG. 2 is a diagram illustrating an LTE network architecture 200 employing various apparatuses 100 (See FIG. 1). The LTE network architecture 200 may be referred to as an Evolved Packet System (EPS) 200. The EPS 200 may include one or more user equipment (UE) 202, an Evolved UMTS Terrestrial Radio Access Network (E-UTRAN) 204, an Evolved Packet Core (EPC) 210, a Home Subscriber Server (HSS) 220, and an Operator's IP Services 222. The EPS can interconnect with other access networks, but for simplicity, those entities/interfaces are not shown. As shown, the EPS provides packet-switched services, however, as those skilled in the art will readily appreciate, the various concepts presented throughout this disclosure may be extended to networks providing circuit-switched services.

The E-UTRAN includes the evolved Node B (eNB) 206 and other eNBs 208. The eNB 206 provides user and control plane protocol terminations toward the UE 202. The eNB 206 may be connected to the other eNBs 208 via an X2 interface (i.e., backhaul). The eNB 206 may also be referred to by those skilled in the art as a base station, a base transceiver station, a radio base station, a radio transceiver, a transceiver function, a basic service set (BSS), an extended service set (ESS), or some other suitable terminology. The eNB 206 provides an access point to the EPC 210 for a UE 202. Examples of UEs 202 include a cellular phone, a smart phone, a session initiation protocol (SIP) phone, a laptop, a personal digital assistant (PDA), a satellite radio, a global positioning system, a multimedia device, a video device, a digital audio player (e.g., MP3 player), a camera, a game console, or any other similar functioning device. The UE 202 may also be referred to by those skilled in the art as a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology.

The eNB 206 is connected by an S1 interface to the EPC 210. The EPC 210 includes a Mobility Management Entity (MME) 212, other MMEs 214, a Serving Gateway 216, and a Packet Data Network (PDN) Gateway 218. The MME 212 is the control node that processes the signaling between the UE 202 and the EPC 210. Generally, the MME 212 provides bearer and connection management. All user IP packets are transferred through the Serving Gateway 216, which itself is connected to the PDN Gateway 218. The PDN Gateway 218 provides UE IP address allocation as well as other functions. The PDN Gateway 218 is connected to the Operator's IP Services 222. The Operator's IP Services 222 include the Internet, the Intranet, an IP Multimedia Subsystem (IMS), and a PS Streaming Service (PSS).

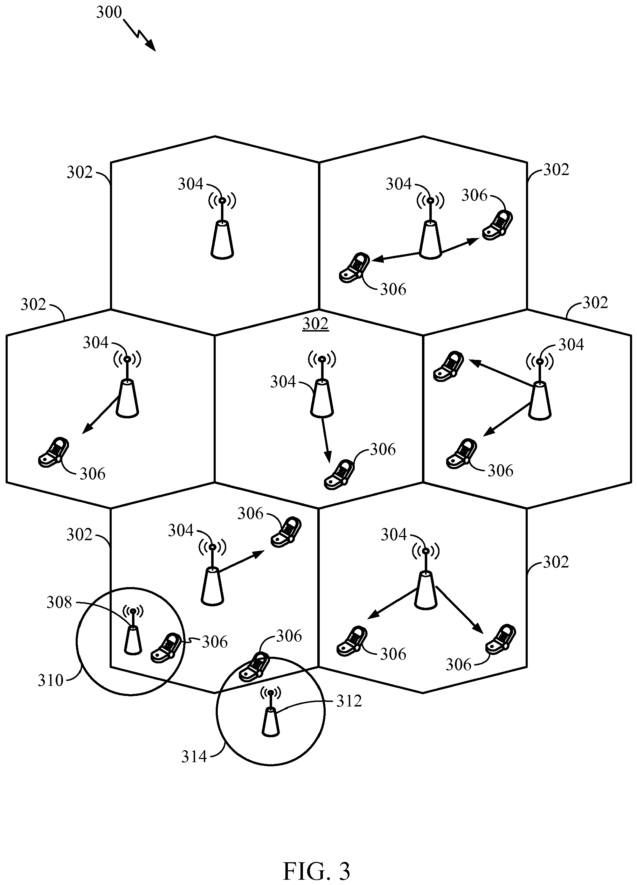

FIG. 3 is a diagram illustrating an example of an access network in an LTE network architecture. In this example, the access network 300 is divided into a number of cellular regions (cells) 302. One or more lower power class eNBs 308, 312 may have cellular regions 310, 314, respectively, that overlap with one or more of the cells 302. The lower power class eNBs 308, 312 may be femto cells (e.g., home eNBs (HeNBs)), pico cells, or micro cells. A higher power class or macro eNB 304 is assigned to a cell 302 and is configured to provide an access point to the EPC 210 for all the UEs 306 in the cell 302. There is no centralized controller in this example of an access network 300, but a centralized controller may be used in alternative configurations. The eNB 304 is responsible for all radio related functions including radio bearer control, admission control, mobility control, scheduling, security, and connectivity to the serving gateway 216 (see FIG. 2).

The modulation and multiple access scheme employed by the access network 300 may vary depending on the particular telecommunications standard being deployed. In LTE applications, OFDM is used on the DL and SC-FDMA is used on the UL to support both frequency division duplexing (FDD) and time division duplexing (TDD). As those skilled in the art will readily appreciate from the detailed description to follow, the various concepts presented herein are well suited for LTE applications. However, these concepts may be readily extended to other telecommunication standards employing other modulation and multiple access techniques. By way of example, these concepts may be extended to Evolution-Data Optimized (EV-DO) or Ultra Mobile Broadband (UMB). EV-DO and UMB are air interface standards promulgated by the 3rd Generation Partnership Project 2 (3GPP2) as part of the CDMA2000 family of standards and employs CDMA to provide broadband Internet access to mobile stations. These concepts may also be extended to Universal Terrestrial Radio Access (UTRA) employing Wideband-CDMA (W-CDMA) and other variants of CDMA, such as TD-SCDMA; Global System for Mobile Communications (GSM) employing TDMA; and Evolved UTRA (E-UTRA), Ultra Mobile Broadband (UMB), IEEE 802.11 (Wi-Fi), IEEE 802.16 (WiMAX), IEEE 802.20, and Flash-OFDM employing OFDMA. UTRA, E-UTRA, UMTS, LTE and GSM are described in documents from the 3GPP organization. CDMA2000 and UMB are described in documents from the 3GPP2 organization. The actual wireless communication standard and the multiple access technology employed will depend on the specific application and the overall design constraints imposed on the system.

The eNB 304 may have multiple antennas supporting MIMO technology. The use of MIMO technology enables the eNB 304 to exploit the spatial domain to support spatial multiplexing, beamforming, and transmit diversity.

Spatial multiplexing may be used to transmit different streams of data simultaneously on the same frequency. The data steams may be transmitted to a single UE 306 to increase the data rate or to multiple UEs 306 to increase the overall system capacity. This is achieved by spatially precoding each data stream (i.e., applying a scaling of an amplitude and a phase) and then transmitting each spatially precoded stream through multiple transmit antennas on the downlink. The spatially precoded data streams arrive at the UE(s) 306 with different spatial signatures, which enables each of the UE(s) 306 to recover the one or more data streams destined for that UE 306. On the uplink, each UE 306 transmits a spatially precoded data stream, which enables the eNB 304 to identify the source of each spatially precoded data stream.

Spatial multiplexing is generally used when channel conditions are good. When channel conditions are less favorable, beamforming may be used to focus the transmission energy in one or more directions. This may be achieved by spatially precoding the data for transmission through multiple antennas. To achieve good coverage at the edges of the cell, a single stream beamforming transmission may be used in combination with transmit diversity.

In the detailed description that follows, various aspects of an access network will be described with reference to a MIMO system supporting OFDM on the downlink. OFDM is a spread-spectrum technique that modulates data over a number of subcarriers within an OFDM symbol. The subcarriers are spaced apart at precise frequencies. The spacing provides "orthogonality" that enables a receiver to recover the data from the subcarriers. In the time domain, a guard interval (e.g., cyclic prefix) may be added to each OFDM symbol to combat inter-OFDM-symbol interference. The uplink may use SC-FDMA in the form of a DFT-spread OFDM signal to compensate for high peak-to-average power ratio (PARR).

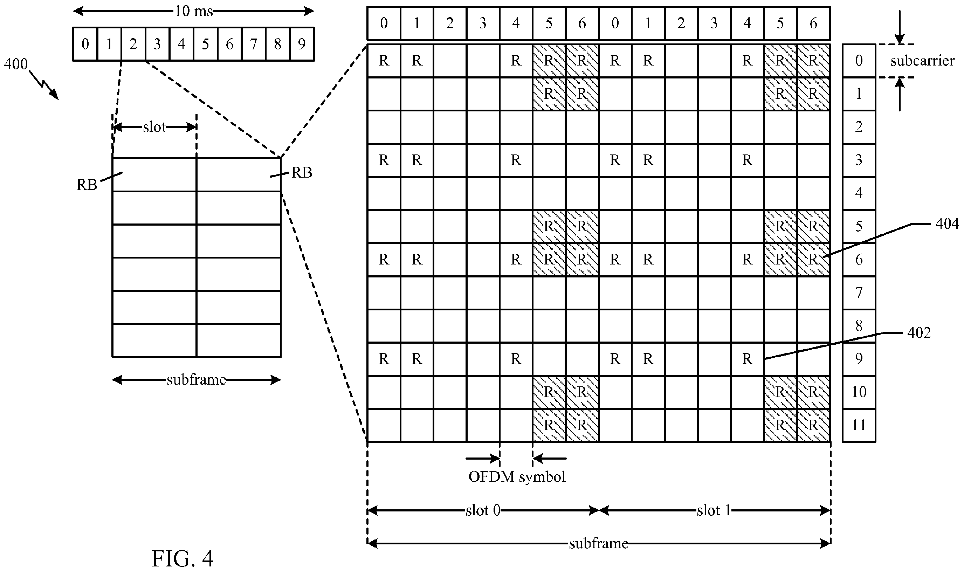

Various frame structures may be used to support the DL and UL transmissions. An example of a DL frame structure will now be presented with reference to FIG. 4. However, as those skilled in the art will readily appreciate, the frame structure for any particular application may be different depending on any number of factors. In this example, a frame (10 ms) is divided into 10 equally sized sub-frames. Each sub-frame includes two consecutive time slots.

A resource grid may be used to represent two time slots, each time slot including a resource block. The resource grid is divided into multiple resource elements. In LTE, a resource block contains 12 consecutive subcarriers in the frequency domain and, for a normal cyclic prefix in each OFDM symbol, 7 consecutive OFDM symbols in the time domain, or 84 resource elements. Some of the resource elements, as indicated as R 402, 404, include DL reference signals (DL-RS). The DL-RS include cell-specific RS (CRS) (also sometimes called common RS) 402 and UE-specific RS (UE-RS) 404. UE-RS 404 are transmitted only on the resource blocks upon which the corresponding physical downlink shared channel (PDSCH) is mapped. The number of bits carried by each resource element depends on the modulation scheme. Thus, the more resource blocks that a UE receives and the higher the modulation scheme, the higher the data rate for the UE.

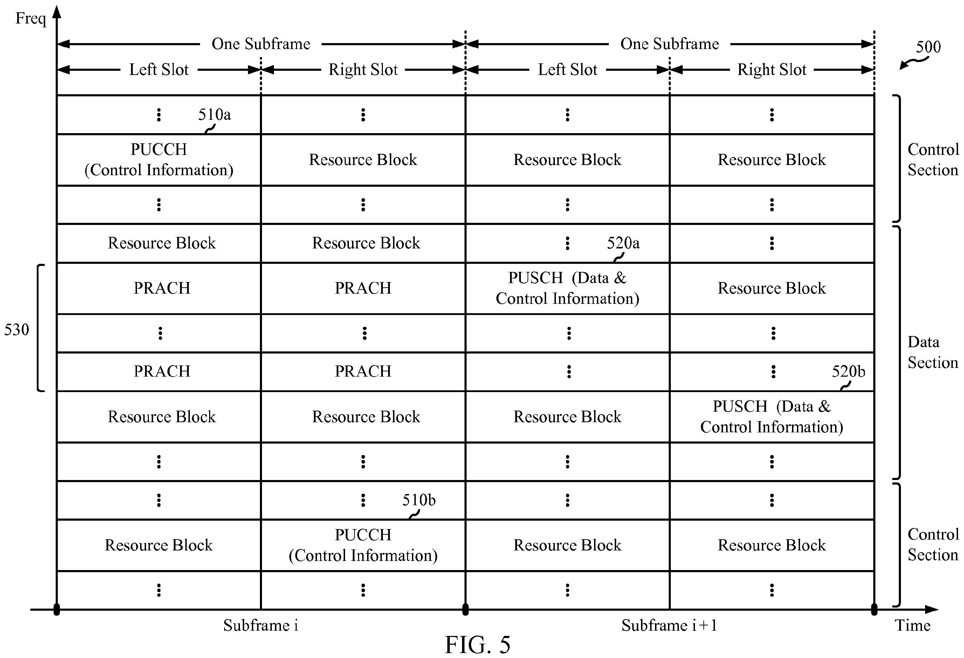

An example of a UL frame structure 500 will now be presented with reference to FIG. 5. FIG. 5 shows an exemplary format for the UL in LTE. The available resource blocks for the UL may be partitioned into a data section and a control section. The control section may be formed at the two edges of the system bandwidth and may have a configurable size. The resource blocks in the control section may be assigned to UEs for transmission of control information. The data section may include all resource blocks not included in the control section. The design in FIG. 5 results in the data section including contiguous subcarriers, which may allow a single UE to be assigned all of the contiguous subcarriers in the data section.

A UE may be assigned resource blocks 510a, 510b in the control section to transmit control information to an eNB. The UE may also be assigned resource blocks 520a, 520b in the data section to transmit data to the eNB. The UE may transmit control information in a physical uplink control channel (PUCCH) on the assigned resource blocks in the control section. The UE may transmit only data or both data and control information in a physical uplink shared channel (PUSCH) on the assigned resource blocks in the data section. A UL transmission may span both slots of a subframe and may hop across frequency as shown in FIG. 5.

As shown in FIG. 5, a set of resource blocks may be used to perform initial system access and achieve UL synchronization in a physical random access channel (PRACH) 530. The PRACH 530 carries a random sequence and cannot carry any UL data/signaling. Each random access preamble occupies a bandwidth corresponding to six consecutive resource blocks. The starting frequency is specified by the network. That is, the transmission of the random access preamble is restricted to certain time and frequency resources. There is no frequency hopping for the PRACH. The PRACH attempt is carried in a single subframe (1 ms) and a UE can make only a single PRACH attempt per frame (10 ms).

The PUCCH, PUSCH, and PRACH in LTE are described in 3GPP TS 36.211, entitled "Evolved Universal Terrestrial Radio Access (E-UTRA); Physical Channels and Modulation," which is publicly available.

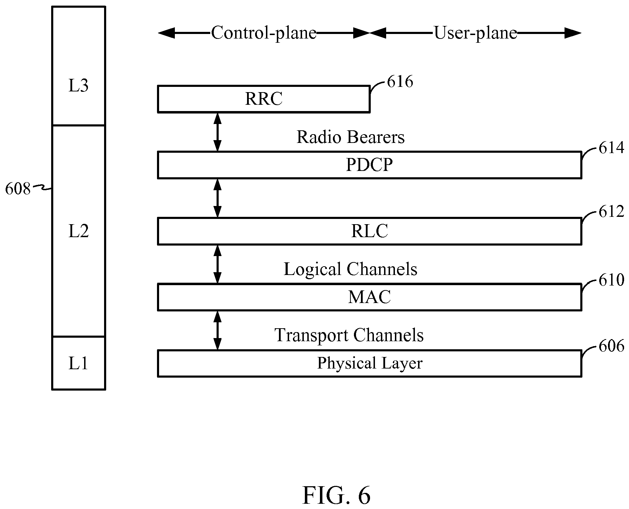

The radio protocol architecture may take on various forms depending on the particular application. An example for an LTE system will now be presented with reference to FIG. 6. FIG. 6 is a conceptual diagram illustrating an example of the radio protocol architecture for the user and control planes.

Turning to FIG. 6, the radio protocol architecture for the UE and the eNB is shown with three layers: Layer 1, Layer 2, and Layer 3. Layer 1 is the lowest layer and implements various physical layer signal processing functions. Layer 1 will be referred to herein as the physical layer 606. Layer 2 (L2 layer) 608 is above the physical layer 606 and is responsible for the link between the UE and eNB over the physical layer 606.

In the user plane, the L2 layer 608 includes a media access control (MAC) sublayer 610, a radio link control (RLC) sublayer 612, and a packet data convergence protocol (PDCP) 614 sublayer, which are terminated at the eNB on the network side. Although not shown, the UE may have several upper layers above the L2 layer 608 including a network layer (e.g., IP layer) that is terminated at the PDN gateway 218 (see FIG. 2) on the network side, and an application layer that is terminated at the other end of the connection (e.g., far end UE, server, etc.).

The PDCP sublayer 614 provides multiplexing between different radio bearers and logical channels. The PDCP sublayer 614 also provides header compression for upper layer data packets to reduce radio transmission overhead, security by ciphering the data packets, and handover support for UEs between eNBs. The RLC sublayer 612 provides segmentation and reassembly of upper layer data packets, retransmission of lost data packets, and reordering of data packets to compensate for out-of-order reception due to hybrid automatic repeat request (HARQ). The MAC sublayer 610 provides multiplexing between logical and transport channels. The MAC sublayer 610 is also responsible for allocating the various radio resources (e.g., resource blocks) in one cell among the UEs. The MAC sublayer 610 is also responsible for HARQ operations.

In the control plane, the radio protocol architecture for the UE and eNB is substantially the same for the physical layer 606 and the L2 layer 608 with the exception that there is no header compression function for the control plane. The control plane also includes a radio resource control (RRC) sublayer 616 in Layer 3. The RRC sublayer 616 is responsible for obtaining radio resources (i.e., radio bearers) and for configuring the lower layers using RRC signaling between the eNB and the UE.

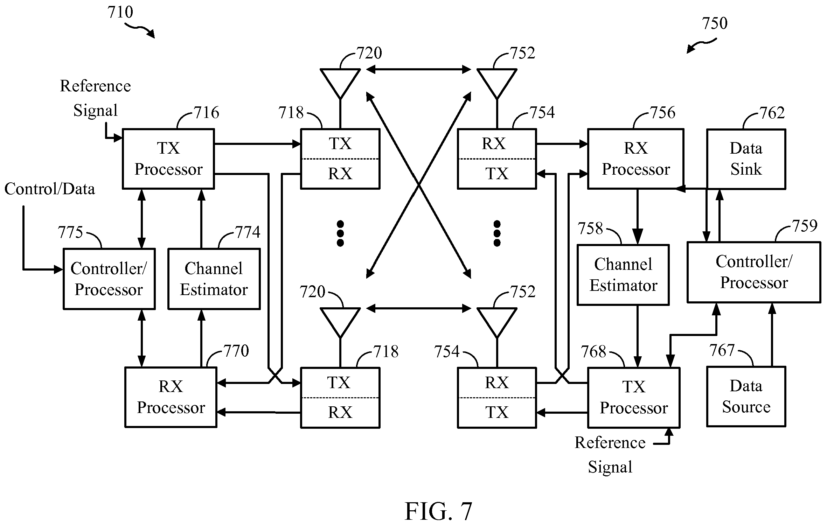

FIG. 7 is a block diagram of an eNB 710 in communication with a UE 750 in an access network. In the DL, upper layer packets from the core network are provided to a controller/processor 775. The controller/processor 775 implements the functionality of the L2 layer described earlier in connection with FIG. 6. In the DL, the controller/processor 775 provides header compression, ciphering, packet segmentation and reordering, multiplexing between logical and transport channels, and radio resource allocations to the UE 750 based on various priority metrics. The controller/processor 775 is also responsible for HARQ operations, retransmission of lost packets, and signaling to the UE 750.

The TX processor 716 implements various signal processing functions for the L1 layer (i.e., physical layer). The signal processing functions includes coding and interleaving to facilitate forward error correction (FEC) at the UE 750 and mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols are then split into parallel streams. Each stream is then mapped to an OFDM subcarrier, multiplexed with a reference signal (e.g., pilot) in the time and/or frequency domain, and then combined together using an Inverse Fast Fourier Transform (IFFT) to produce a physical channel carrying a time domain OFDM symbol stream. The OFDM stream is spatially precoded to produce multiple spatial streams. Channel estimates from a channel estimator 774 may be used to determine the coding and modulation scheme, as well as for spatial processing. The channel estimate may be derived from a reference signal and/or channel condition feedback transmitted by the UE 750. Each spatial stream is then provided to a different antenna 720 via a separate transmitter 718TX. Each transmitter 718TX modulates an RF carrier with a respective spatial stream for transmission.

At the UE 750, each receiver 754RX receives a signal through its respective antenna 752. Each receiver 754RX recovers information modulated onto an RF carrier and provides the information to the receiver (RX) processor 756.

The RX processor 756 implements various signal processing functions of the L1 layer. The RX processor 756 performs spatial processing on the information to recover any spatial streams destined for the UE 750. If multiple spatial streams are destined for the UE 750, they may be combined by the RX processor 756 into a single OFDM symbol stream. The RX processor 756 then converts the OFDM symbol stream from the time-domain to the frequency domain using a Fast Fourier Transform (FFT). The frequency domain signal comprises a separate OFDM symbol stream for each subcarrier of the OFDM signal. The symbols on each subcarrier, and the reference signal, is recovered and demodulated by determining the most likely signal constellation points transmitted by the eNB 710. These soft decisions may be based on channel estimates computed by the channel estimator 758. The soft decisions are then decoded and deinterleaved to recover the data and control signals that were originally transmitted by the eNB 710 on the physical channel. The data and control signals are then provided to the controller/processor 759.

The controller/processor 759 implements the L2 layer described earlier in connection with FIG. 6. In the UL, the control/processor 759 provides demultiplexing between transport and logical channels, packet reassembly, deciphering, header decompression, control signal processing to recover upper layer packets from the core network. The upper layer packets are then provided to a data sink 762, which represents all the protocol layers above the L2 layer. Various control signals may also be provided to the data sink 762 for L3 processing. The controller/processor 759 is also responsible for error detection using an acknowledgement (ACK) and/or negative acknowledgement (NACK) protocol to support HARQ operations.

In the UL, a data source 767 is used to provide upper layer packets to the controller/processor 759. The data source 767 represents all protocol layers above the L2 layer (L2). Similar to the functionality described in connection with the DL transmission by the eNB 710, the controller/processor 759 implements the L2 layer for the user plane and the control plane by providing header compression, ciphering, packet segmentation and reordering, and multiplexing between logical and transport channels based on radio resource allocations by the eNB 710. The controller/processor 759 is also responsible for HARQ operations, retransmission of lost packets, and signaling to the eNB 710.

Channel estimates derived by a channel estimator 758 from a reference signal or feedback transmitted by the eNB 710 may be used by the TX processor 768 to select the appropriate coding and modulation schemes, and to facilitate spatial processing. The spatial streams generated by the TX processor 768 are provided to different antenna 752 via separate transmitters 754TX. Each transmitter 754TX modulates an RF carrier with a respective spatial stream for transmission.

The UL transmission is processed at the eNB 710 in a manner similar to that described in connection with the receiver function at the UE 750. Each receiver 718RX receives a signal through its respective antenna 720. Each receiver 718RX recovers information modulated onto an RF carrier and provides the information to a RX processor 770. The RX processor 770 implements the L1 layer.

The controller/processor 759 implements the L2 layer described earlier in connection with FIG. 6. In the UL, the control/processor 759 provides demultiplexing between transport and logical channels, packet reassembly, deciphering, header decompression, control signal processing to recover upper layer packets from the UE 750. Upper layer packets from the controller/processor 775 may be provided to the core network. The controller/processor 759 is also responsible for error detection using an ACK and/or NACK protocol to support HARQ operations.

The processing system 114 described in relation to FIG. 1 includes the eNB 710. In particular, the processing system 114 includes the TX processor 716, the RX processor 770, and the controller/processor 775. The processing system 114 may further include RRHs to which the eNB 710 is coupled. The processing system 114 described in relation to FIG. 1 includes the UE 750. In particular, the processing system 114 includes the TX processor 768, the RX processor 756, and the controller/processor 759.

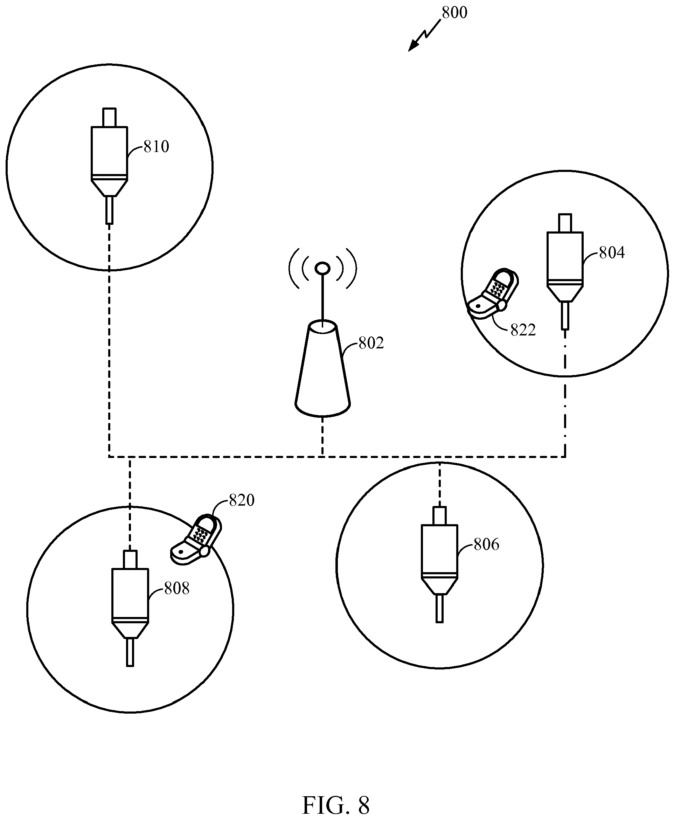

FIG. 8 illustrates a network 800 having a macro node and a number of remote radio heads (RRHs), in accordance with certain aspects of the present disclosure. The macro node 802 generally connected to RRHs 804, 806, 808, 810 with optical fiber. In certain aspects, network 800 may be a homogeneous network or a heterogeneous network and the RRHs 804-810 may be low power or high power RRHs. In an aspect, the macro node 802 handles all scheduling within the cell, for itself and the RRHs. The RRHs may be configured with the same cell identifier (ID) as the macro node 802 or with different cell IDs. If the RRHs are configured with the same cell ID, the macro node 802 and the RRHs may operate as essentially one cell controlled by the macro node 802. On the other hand, if the RRHs and the macro node 802 are configured with different cell IDs, the macro node 802 and the RRHs may appear to a UE as different cells, though all control and scheduling may still remain with the macro node 802.

In certain aspects, heterogeneous setups may show the most performance benefit for advanced UEs (e.g., UEs for LTE Rel-10 or greater) receiving data transmission from RRH/nodes. A key difference between setups is typically related to control signaling and handling of legacy impact. In an aspect, each of the RRHs may be assigned to transmit on one or more CSI-RS ports. In general, the macro node and RRHs may be assigned a subset of the CSI-RS ports. For example, if there are 8 available CSI-RS ports, RRH 804 may be assigned to transmit on CSI-RS ports 0, 1, RRH 806 may be assigned to transmit on CSI-RS ports 2, 3, RRH 808 may be assigned to transmit on CSI-RS ports 4, 5, and RRH 810 may be assigned to transmit on CSI-RS ports 6, 7. The macro node and/or the RRHs may be assigned the same CSI-RS ports. For example, RRH 804 and RRH 808 may be assigned to transmit on CSI-RS ports 0, 1, 2, 3, and RRH 806 and RRH 810 may be assigned to transmit on CSI-RS ports 4, 5, 6, 7. In such a configuration, the CSI-RS from RRHs 804, 808 would overlap and the CSI-RS from RRHs 806, 810 would overlap.

The CSI-RS is typically UE-specific. Each UE may be configured with up to a predetermined number of CSI-RS ports (e.g., 8 CSI-RS ports) and may receive CSI-RS on the CSI-RS ports from one or more of the RRHs 804 - 810. For example, the UE 820 may receive CSI-RS on CSI-RS ports 0, 1 from RRH 804, CSI-RS on CSI-RS ports 2, 3 from RRH 806, CSI-RS on CSI-RS ports 4, 5 from RRH 808, and CSI-RS on CSI-RS ports 6, 7 from RRH 810. Such a configuration is typically specific to the UE 820, as the UE 820 may receive CSI-RS on different ports from the same RRHs. For example, the UE 822 may also be configured with 8 CSI-RS ports and receive CSI-RS on CSI-RS ports 0, 1 from RRH 808, CSI-RS on CSI-RS ports 2, 3 from RRH 810, CSI-RS on CSI-RS ports 4, 5 from RRH 804, and CSI-RS on CSI-RS ports 6, 7 from RRH 806. Generally, for any particular UE, the CSI-RS ports may be distributed among the RRHs and the particular UE may be configured with any number of the CSI-RS ports to receive CSI-RS on those ports from RRHs configured to send on those ports to the particular UE.

In certain aspects, when each of the RRHs share the same cell ID with the macro node 802, control information may be transmitted using CRS from the macro node or both the macro node and all of the RRHs. The CRS is typically transmitted from each of the transmission/reception points (i.e., macro node, RRHs) (a transmission/reception point is herein referred to as "TxP") using the same resource elements, and therefore the signals are on top of each other. In certain aspects, the term transmission/reception point ("TxP") typically represents geographically separated transmission/reception nodes which are being controlled by at least one central entity (e.g., eNodeB) and may have the same or different cell IDs. When each of the TxPs has the same cell ID, CRS transmitted from each of the TxPs may not be differentiated. In certain aspects, when the RRHs have different cell IDs, the CRS transmitted from each of the TxPs using the same resource elements may collide. In an aspect, when the RRHs have different cell IDs and the CRS collide, CRS transmitted from each of the TxPs may be differentiated by interference cancellation techniques and advanced receiver processing.

In certain aspects, when CRS is transmitted from multiple TxPs, proper antenna virtualization is needed if there are an unequal number of physical antennas at the transmitting macro node/RRHs. That is, CRS may be transmitted from an equal number of (virtual) transmit antennas at each macro node and RRH. For example, if the node 802 and the RRHs 804, 806, 808 each have two physical antennas and the RRH 810 has four physical antennas, a first two antennas of the RRH 810 may be configured to transmit CRS port 0 and a second two antennas of the RRH 810 may be configured to transmit CRS port 1. The number of antenna ports may be increased or decreased in relation to the number of physical antennas.

As discussed *supra,* the macro node 802 and the RRHs 804 - 810 may all transmit CRS. However, if only the macro node 802 transmits CRS, an outage may occur close to an RRH due to automatic gain control (AGC) issues. Typically, a difference between same/different cell ID setups is mainly related to control and legacy issues and other potential operations relying on CRS. The scenario with different cell IDs, but colliding CRS configuration may have similarities with the same cell ID setup, which by definition has colliding CRS. The scenario with different cell IDs and colliding CRS typically has the advantage compared to the same cell ID case that system characteristics/components which depend on the cell ID (e.g., scrambling sequences, etc.) may be more easily differentiated.

As discussed *supra,* UEs may receive data transmissions with CSI-RS and may provide CSI feedback. An issue is that the existing codebooks were designed assuming that the path loss for each of the CSI-RS is equal and may therefore suffer some performance loss if this condition is not satisfied. Because multiple RRHs may be transmitting data with CSI-RS, the path loss associated with each of the CSI-RS may be different. As such, codebook refinements may be needed to enable cross TxP CSI feedback that takes into account the proper path losses to TxPs. Multiple CSI feedback may be provided by grouping antenna ports and providing feedback per group.

The exemplary configurations are applicable to macro/RRH setups with same or different cell IDs. In the case of different cell IDs, CRS may be configured to be overlapping, which may lead to a similar scenario as the same cell ID case (but has the advantage that system characteristics which depend on the cell ID (e.g., scrambling sequences, etc.) may be more easily differentiated by the UE).

In certain aspects, an exemplary macro/RRH entity may provide for separation of control/data transmissions within the coverage of a macro/RRH setup. When the cell ID is the same for each TxP, the PDCCH may be transmitted with CRS from the macro node 802 or both the macro node 802 and the RRHs, while the PDSCH may be transmitted with CSI-RS and DM-RS from a subset of the TxPs. When the cell ID is different for some of the TxPs, PDCCH may be transmitted with CRS in each cell ID group. The CRS transmitted from each cell ID group may or may not collide. UEs may not differentiate CRS transmitted from multiple TxPs with the same cell ID, but may differentiate CRS transmitted from multiple TxPs with different cell IDs (e.g., using interference cancellation or similar techniques). The separation of control/data transmissions enables a UE transparent way of "associating" UEs with at least one TxP for data transmission while transmitting control based on CRS transmissions from all the TxPs. This enables cell splitting for data transmission across different TxPs while leaving the control channel common. The term "association" above means the configuration of antenna ports for a specific UE for data transmission. This is different from the association that would be performed in the context of handover. Control may be transmitted based on CRS as discussed *supra.* Separating control and data may allow for a faster reconfiguration of the antenna ports that are used for a UE's data transmission compared to having to go through a handover process. In certain aspects, cross TxP feedback may be possible by configuring a UE's antenna ports to correspond to the physical antennas of different TxPs.

In certain aspects, UE-specific reference signals enable this operation (e.g., in the context of LTE-A, Rel-10 and above). CSI-RS and DM-RS are the reference signals used in the LTE-A context. Interference estimation may be carried out based on CSI-RS muting. With common control, there may be control capacity issues because PDCCH capacity may be limited. Control capacity may be enlarged by using FDM control channels. Relay PDCCH (R-PDCCH) or extensions thereof may be used to supplement, augment, or replace the PDCCH control channel. The UE may provide CSI feedback based on its CSI-RS configuration to provide PMI/RI/CQI. The codebook design may assume that the antennas are not geographically separated, and therefore that there is the same path loss from the antenna array to the UE. This is not the case for multiple RRHs, as the antennas are uncorrelated and see different channels. Codebook refinements may enable more efficient cross TxP CSI feedback. CSI estimation may capture the path loss difference between the antenna ports associated with different TxPs. Furthermore, multiple feedback may be provided by grouping antenna ports and provided feedback peer group.

### Mobility Procedures In Wireless Networks With Distributed Remote Radio Heads

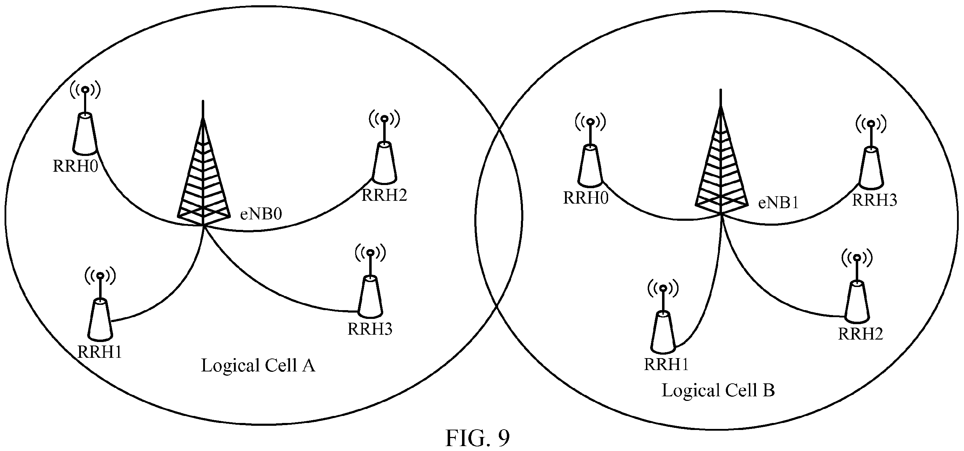

FIG. 9 illustrates two logical cells, wherein remote radio heads (RRHs) may be distributed in different locations throughout the logical cells, in accordance with certain aspects of the present disclosure. The RRHs may be connected to a macro cell (e.g., eNB0 and eNB1), for example, by fiber optic cables, as described above. RRHs may be used to extend the coverage of the macro cell. There may be negligible latency between the macro cell and RRHs.

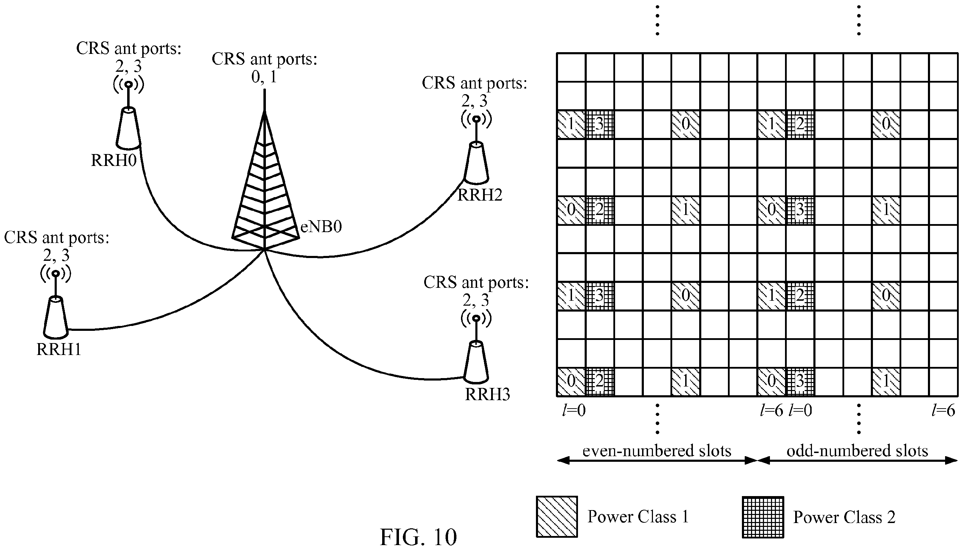

FIG. 10 illustrates RRHs transmitting on one or more CRS antenna ports, in accordance with certain aspects of the present disclosure. The number of CRS ports configured in one logical cell is conveyed by the cyclic redundancy check (CRC) mask for a physical broadcast channel (PBCH). Depending on the definition of CRS antenna ports, RRHs in a logical cell may or may not transmit the CRS over corresponding resource elements (REs). For some embodiments, all RRHs may transmit part or whole of the CRS. The CRS may function in a single frequency network. Different power class nodes (e.g., macro, femto, pico, and RRH) may be assigned to different CRS ports, as illustrated in FIG. 10. Transmission antennas at eNB0 may be utilized to define CRS ports 0 and 1, and transmission antennas at the RRHs may be utilized together to define CRS ports 2 and 3.

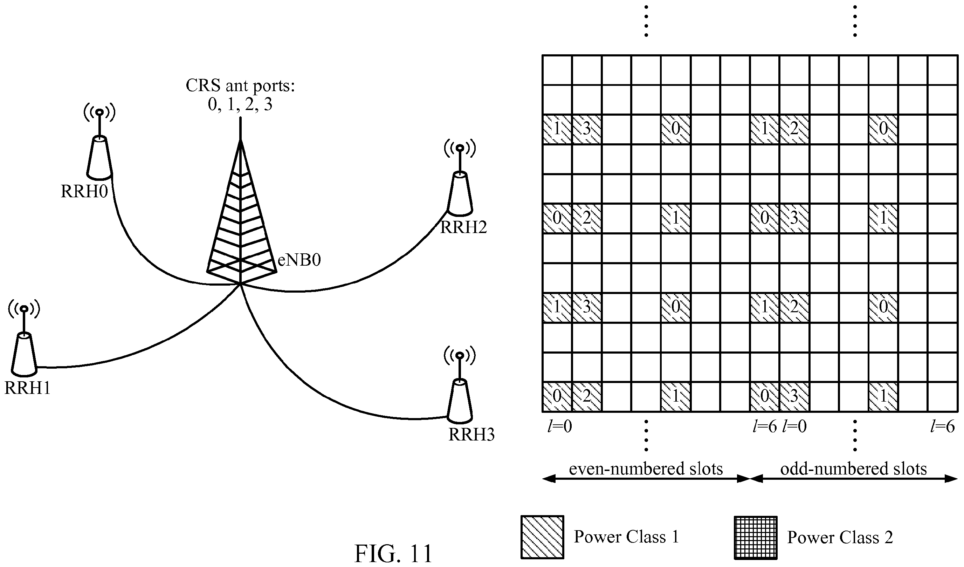

FIG. 11 illustrates all CRS antenna ports formed with transmit antennas at a macro eNB, in accordance with certain aspects of the present disclosure. For some embodiments, only a macro cell may transmit the CRS and, therefore, the RRHs may not transmit the CRS, as illustrated in FIG. 11. In other words, CRS antenna ports 0, 1, 2, and 3 may be formed with transmit antennas at eNB0 only. However, RRHs may support channel state information reference signal (CSI-RS) antenna ports (as described above), but may not participate in legacy downlink (DL) transmissions.

Parameters for CSI-RS may be cell-specific and configured, for example, via higher layer signaling. The parameters generally include the number of CSI-RS ports (e.g., 1, 2, 4, or 8), the CSI-RS pattern configuration, the CSI-RS subframe configuration, and a user equipment (UE) assumption on reference physical downlink shared channel (PDSCH) transmission power for CSI feedback (*P_{c}*). *P_{c}* is the assumed ratio of PDSCH energy per resource element (EPRE) to CSI-RS EPRE when UE derives CSI feedback and takes values in the range of [-8, 15] dB with 1 dB step size. The configuration of PDSCH muting may also be cell-specific and configured by higher layer signaling, for example, a 16-bit bitmap with each bit corresponding to one 4-port CSI-RS configuration. For some embodiments, PDSCH muting may be configured in a cell without the CSI-RS. Higher layer signaling may signal different CSI-RS and PDSCH muting configurations to different UEs since these parameters may be individually signaled to the UE.

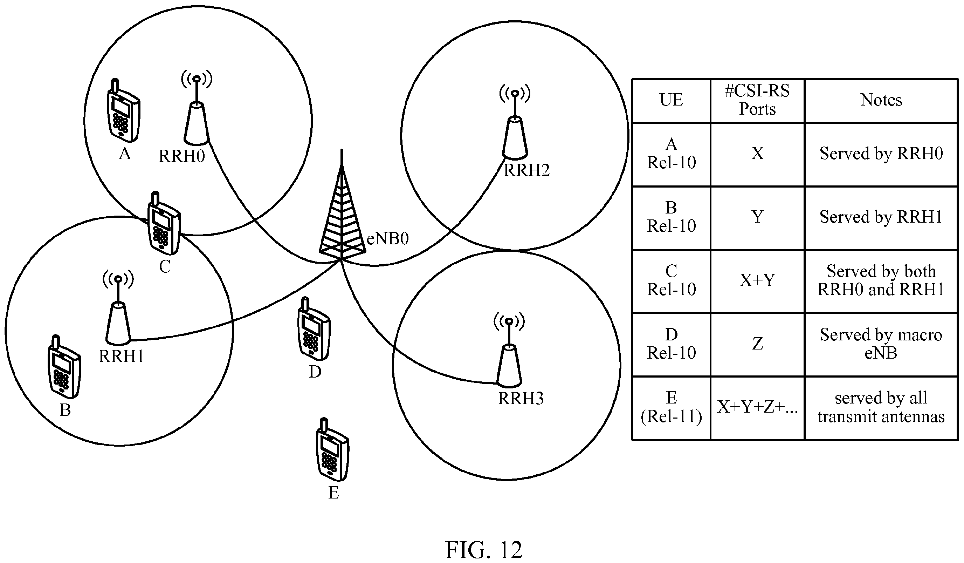

FIG. 12 illustrates an example CSI-RS configuration for RRHs, in accordance with certain aspects of the present disclosure. Transmission antennas at the RRHs and the macro eNB (eNB0) may be utilized to formulate and define different number of CSI-RS antenna ports for different UEs under different situations. For example, RRHO may be assigned to transmit on CSI-RS port X for a UE located A, which is served by RRHO. RRH1 may be assigned to transmit on CSI-RS port Y for the UE located at B. Since the UE located at C may be served by both RRHO and RRH1, RRHO and RRH1 may be assigned to transmit on CSI-RS ports X and Y for the UE located at C. eNB0 may be assigned to transmit on CSI-RS port Z for the UE located at D. A Rel-11 UE located at E may be served by all transmit antennas, as will be described further herein.

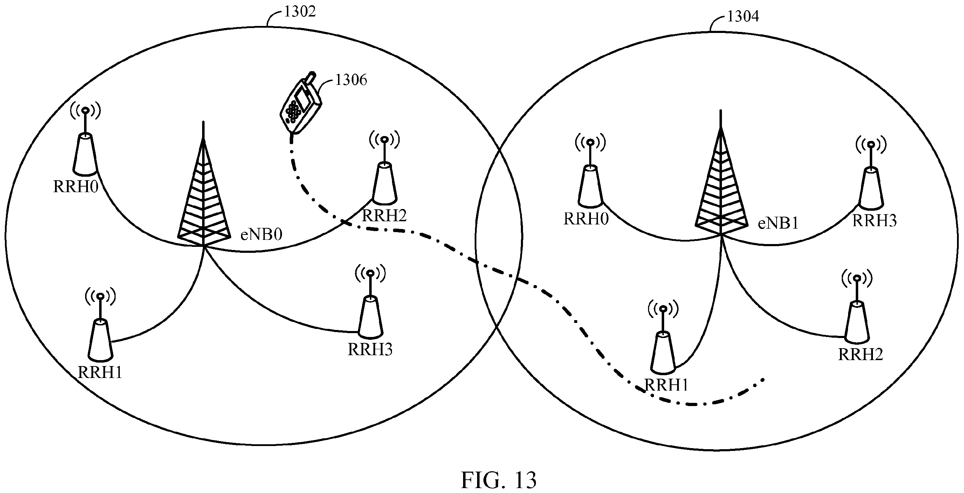

FIG. 13 illustrates an example of the mobility of a UE 1306 within a cell 1302 and between multiple cells 1302, 1304, in accordance with certain aspects of the present disclosure. Mobility procedures followed by the UE may vary based on the release of the UE (e.g., Rel-8/9, Rel-10, or Rel-11 and beyond).

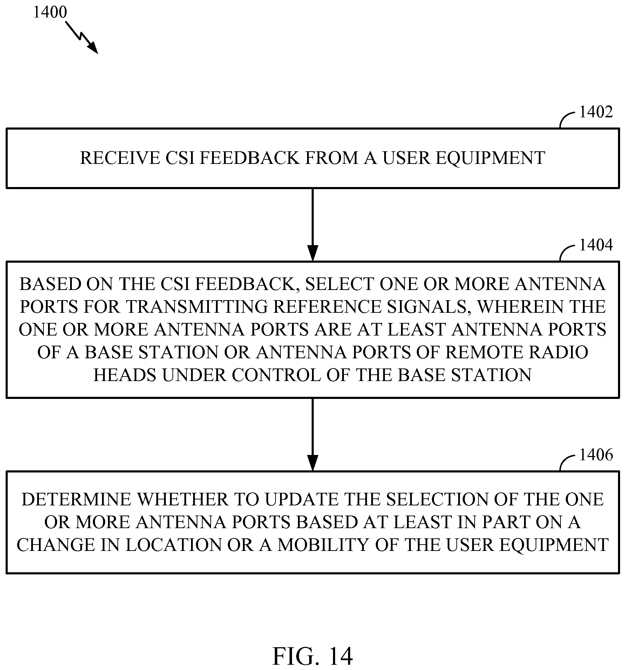

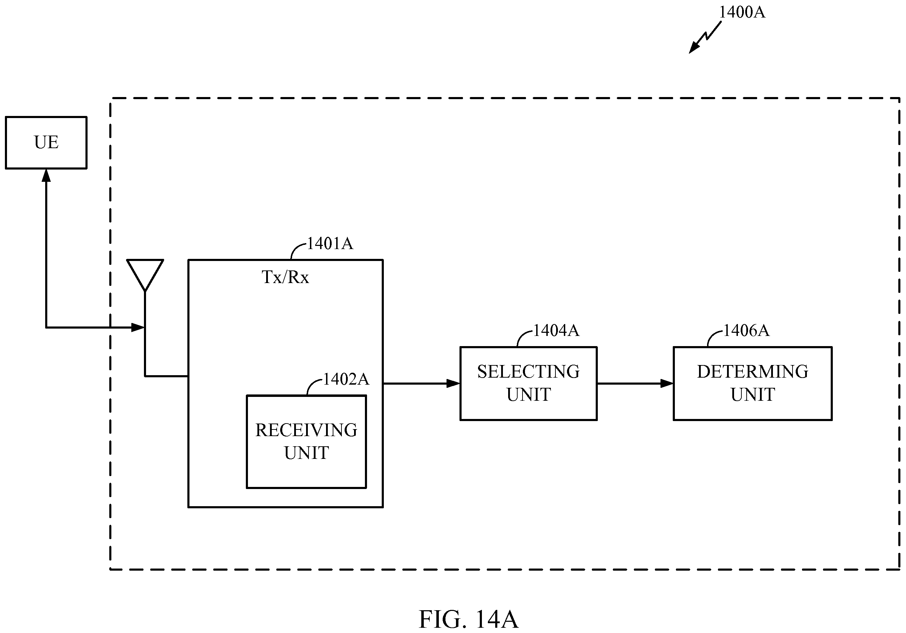

FIG. 14 illustrates example operations 1400 for supporting mobility procedures in wireless networks with multiple RRHs, in accordance with certain aspects of the present disclosure. The operations 1400 may be performed, for example, by a macro eNB.

At 1402, the macro eNB may receive CSI feedback (e.g., CQI feedback) from a UE. At 1404, based on the CSI feedback, the macro eNB may select one or more antenna ports for transmitting RSs (e.g., CRS and CSI-RS), wherein the one or more antenna ports are at least antenna ports of a the macro eNB or antenna ports of RRHs under control of the macro eNB.

At 1406, the macro eNB may determine whether to update the selection of the one or more antenna ports based at least in part on a change in location or a mobility of the UE. For certain aspects, the determination whether to update the selection of the one or more antenna ports is made based on a proximity of the UE to one or more of the macro eNB and the RRHs. For certain aspects, a location of the UE may be determined based on sounding reference signals (SRSs) transmitted from the UE. The determination whether to update the selection of the one or more antenna ports may be made based at least in part on CSI feedback or a quality of SRSs received at different RRHs. For certain aspects, a location of the UE may be determined based on global positioning system (GPS) coordinates of the UE. For certain aspects, the determination whether to update the selection of the one or more antenna ports may be made based on measurements received from the transmitted RSs.

Rel-8/9 UEs may rely on CRS to perform tasks, generally including performing measurements (e.g., RSRP), and data and control decoding. From a CRS point of view, introduction of RRHs in the same logic cell may not make a difference to the Rel-8/9 UEs. In other words, Rel-8/9 UEs may follow traditional mobility procedures.

Mobility procedures for Rel-10 UEs within a macro cell coverage generally include higher layer reconfiguration. At the eNB side, radio resource control (RRC) reconfiguration may be triggered in multiple ways. For example, reconfiguration may be triggered by the position of a UE, which may be estimated with a sounding RS (SRS) sent in the uplink from the UE. Also, the UE may report GPS coordinates back from time to time. As another example, the eNB may receive quality information of the SRS at different RRHs. In TDD, since DL/UL channels may be reciprocal, reconfiguration may be triggered by UL channel estimates with the SRS. For some embodiments, reconfiguration may be triggered by channel quality indicator (CQI) feedback from the UE. For some embodiments, the UE may transmit a reconfiguration request in the UL based on measurements with the configured CSI-RS.

RRC reconfiguration generally includes configuring the number of CSI-RS antenna ports and corresponding configurations. For example, referring back to FIG. 12, when the UE moves along A→C→B, the RRC may reconfigure the UE to see the X, X+Y, and Y CSI-RS ports, respectively. The reconfiguration of the CSI-RS ports may be triggered by any of the above-described procedures. For example, when the UE moves from location A to location C, the UE may transmit an SRS in the uplink, triggering RRC reconfiguration.

Referring back to FIG. 13, when the UE 1306 moves outside of macro cell 1302 coverage, mobility procedures for Rel-10 UEs outside the macro cell 1302 coverage generally includes the UE 1306 performing measurements based on CRS. Inter-cell handover (e.g., between macro cell 1302 and macro cell 1304) may be based on the measurements. For certain aspects, the procedures may include a network-controlled handover.

Mobility procedures for Rel-11 and beyond UEs within a macro cell coverage may include higher layer reconfiguration as described above with respect to Rel-10 UEs. For certain aspects, the reconfiguration may not be required for Rel-11 UEs configured with a large number of CSI-RS antenna ports, as will be described further below.

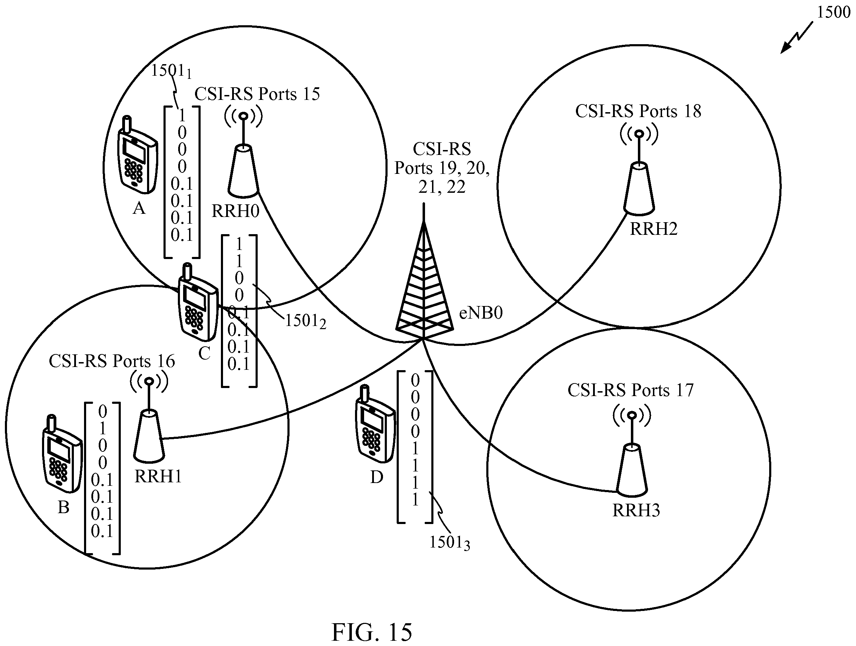

FIG. 15 illustrates an example of the mobility of a Rel-11 (and beyond) UE within a logical cell 1500, wherein the UE is configured with a large number of CSI-RS antenna ports, in accordance with certain aspects of the present disclosure. The CSI-RS antenna ports may be defined in a distributed manner, for example, including all transmit antennas from all RRHs within the logical cell 1500. Mobility within the macro cell coverage may be supported naturally according to the corresponding CSI feedback.

The codebook 1501 in Rel-11 may be optimized by taking into account the distributed CSI-RS ports. For example, the codebook 1501 may have entries indicating the CSI feedback associated with each CSI-RS port 15-22. As illustrated, RRHO may be assigned to transmit on CSI-RS port 15, RRH1 may be assigned to transmit on CSI-RS port 16, RRH2 may be assigned to transmit on CSI-RS port 18, RRH3 may be assigned to transmit on CSI-RS port 17, and eNB0 may be assigned to transmit on CSI-RS ports 19-22.

When the UE is within the coverage of one or more of the RRHs or the eNB, the codebook 1501 may indicate the appropriate RRHs (or eNB) for receiving transmissions. For example, when the UE is at location A (i.e., within coverage of RRHO), the CSI feedback associated with CSI-RS port 15 may be stronger (e.g., 1) compared to the CSI feedback associated with the remaining CSI-RS ports (e.g., 0 or 0.1), as indicated by codebook 1501₁. Therefore, the eNB0 may utilize CSI-RS port 15 for transmitting to the UE, since RRHO is assigned to CSI-RS port 15.

As another example, when the UE is at location C (i.e., within coverage of RRHO and RRH1), the CSI feedback associated with CSI-RS ports 15 and 16 may be stronger (e.g., 1) compared to the CSI feedback associated with the remaining CSI-RS ports (e.g., 0 or 0.1), as indicated by codebook 1501₂. Therefore, the eNB0 may utilize CSI-RS ports 15 and 16 for transmitting to the UE, since RRHO is assigned to CSI-RS port 15 and RRH1 is assigned to CSI-RS port 16.

As another example, when the UE is at location D (i.e., within coverage of eNB0), the CSI feedback associated with CSI-RS ports 19-22 may be stronger (e.g., 1) compared to the CSI feedback associated with the remaining CSI-RS ports (e.g., 0), as indicated by codebook 1501₃. Therefore, the eNB0 may utilize CSI-RS ports 19-22 for transmitting to the UE, since CSI-RS ports 19-22 are assigned to eNB0. Therefore, higher layer configuration may not be required for a UE configured with CSI-RS antenna ports assigned to the RRHs within a logical cell.

Referring back to FIG. 13, when the UE 1306 moves outside of macro cell 1302 coverage, mobility procedures for Rel-11 UEs outside the macro cell 1302 coverage generally includes the UE 1306 performing measurements based on CRS. Inter-cell handover (e.g., between macro cell 1302 and macro cell 1304) may be based on the measurements. For certain aspects, the procedures may include a network-controlled handover.

The operations 1400 described above may be performed by any suitable components or other means capable of performing the corresponding function of FIG. 14. For example, operations 1400 illustrated in FIG. 14 correspond to components 1400A illustrated in FIG. 14A. In FIG. 14A, a transceiver (TX/RX) 1401A of a macro eNB may receive a signal at one or more receiver antennas. A receiving unit 1402A of the TX/RX 1401A may receive CSI feedback from a UE. Based on the CSI feedback, a selecting unit 1404A may select one or more antenna ports for transmitting RSs, wherein the one or more antenna ports are at least antenna ports of the macro eNB or antenna ports of RRHs under control of the macro eNB. A determining unit 1406A may determine whether to update the selection of the one or more antenna ports based at least in part on a change in location or a mobility of the UE.

Referring to FIG. 1 and FIG. 7, in one configuration, the apparatus 100 for wireless communication includes means for performing the various methods. The aforementioned means is the processing system 114 configured to perform the functions recited by the aforementioned means. As described *supra,* the processing system 114 includes the TX Processor 716, the RX Processor 770, and the controller/processor 775. As such, in one configuration, the aforementioned means may be the TX Processor 716, the RX Processor 770, and the controller/processor 775 configured to perform the functions recited by the aforementioned means.

In one configuration, the apparatus 100 for wireless communication includes means for performing the various methods. The aforementioned means is the processing system 114 configured to perform the functions recited by the aforementioned means. As described *supra,* the processing system 114 includes the TX Processor 768, the RX Processor 756, and the controller/processor 759. As such, in one configuration, the aforementioned means may be the TX Processor 768, the RX Processor 756, and the controller/processor 759 configured to perform the functions recited by the aforementioned means.

It is understood that the specific order or hierarchy of steps in the processes disclosed is an illustration of exemplary approaches. Based upon design preferences, it is understood that the specific order or hierarchy of steps in the processes may be rearranged. The accompanying method claims present elements of the various steps in a sample order, and are not meant to be limited to the specific order or hierarchy presented.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." Unless specifically stated otherwise, the term "some" refers to one or more. Moreover, nothing disclosed herein is intended to be dedicated to the public regardless of whether such disclosure is explicitly recited in the claims.

## Claims

1. A method (1400) for wireless communications in a logical cell (1302; 1304; 1500) comprising a base station (eNBO), BS, and one or more remote radio heads, RRHs, under control of the BS (eNB0) and distributed in different locations throughout the logical cell, the method being performed by the BS and comprising:
receiving (1402) channel state information, CSI, feedback from a user equipment, UE;
selecting (1404) one or more antenna ports for transmitting reference signals, RSs, to the UE, wherein the one or more antenna ports are selected from antenna ports of the BS (eNB0) and the RRHs; **characterized in that** the selecting is based on the CSI feedback, and **in that** the method further comprises:
determining (1406) whether to update the selection of the one or more antenna ports based at least in part on a change in location of the UE in the logical cell (1302; 1304; 1500) or a mobility of the UE in the logical cell (1302; 1304; 1500), wherein to determine the change in location or mobility of the UE, a location of the UE is determined based on sounding reference signals, SRSs, transmitted from the UE and received at different RRHs or on global positioning system, GPS, coordinates of the UE reported to the BS.

2. The method of claim 1, wherein the determination whether to update the selection of the one or more antenna ports is made based on a proximity of the UE to one or more of the BS and the RRHs.

3. The method of claim 1, wherein the determination whether to update the selection of the one or more antenna ports is made based at least in part on CSI feedback or a quality of SRSs received at different RRHs.

4. The method of claim 1, wherein the determination whether to update the selection of the one or more antenna ports is made based on measurements received from the transmitted RSs.

5. The method of claim 1, wherein the CSI feedback comprises channel quality indicator, CQI, feedback.

6. The method of claim 1, wherein the RS is at least a cell-specific RS, CRS, or a CSI-RS.

7. An apparatus (1400A) for wireless communications in a logical cell (1302; 1304; 1500) comprising a base station (eNBO), BS, and one or more remote radio heads, RRHs, under control of the BS (eNB0) and distributed in different locations throughout the logical cell, the apparatus being at the BS and comprising:
means (1402A) for receiving (1402) channel state information, CSI, feedback from a user equipment, UE;
means (1404A) for selecting (1404) one or more antenna ports for transmitting reference signals, RSs, to the UE, wherein the one or more antenna ports are selected from antenna ports of the BS (eNB0) and of the RRHs, **characterized in that** the means for selecting is configured to select the one or more antenna ports based on the CSI feedback, and **in that** the apparatus further comprises:
means (1406A) for determining (1406) whether to update the selection of the one or more antenna ports based at least in part on a change in location of the UE in the logical cell (1302; 1304; 1500) or a mobility of the UE in the logical cell (1302; 1304; 1500), wherein to determine the change in location or mobility of the UE, a location of the UE is determined based on sounding reference signals, SRSs, transmitted from the UE and received at different RRHs or on global positioning system, GPS, coordinates of the UE reported to the BS.

8. The apparatus of claim 7, wherein determining whether to update the selection of the one or more antenna ports is made based on a proximity of the UE to one or more of the BS and the RRHs.

9. The apparatus of claim 7, wherein determining whether to update the selection of the one or more antenna ports is made based at least in part on CSI feedback or a quality of SRSs received at different RRHs.

10. The apparatus of claim 7, wherein determining whether to update the selection of the one or more antenna ports is made based on measurements received from the transmitted RSs.

11. A computer-program product for wireless communications, comprising a computer-readable medium having instructions stored thereon which, when executed by a processor of a base station, cause the processor to perform any one of the methods of claims 1-6.

## Patentansprüche

1. Ein Verfahren (1400) für drahtlose Kommunikationen in einer logischen Zelle (1302; 1304; 1500), die eine Basisstation bzw. BS (eNB0) und einen oder mehrere Remote Radio Heads bzw. RRHs, die unter der Steuerung der BS (eNB0) stehen und an verschiedenen Positionen über die logische Zelle verteilt sind, aufweist, wobei das Verfahren durch die BS durchgeführt wird und aufweist:
Empfangen (1402) einer Kanalzustandsinformationen (Channel State Informationen bzw. CSI)-Rückkopplung von einem Benutzergerät (User Equipment bzw. UE),
Auswählen (1404) eines oder mehrerer Antennenports für das Senden von Referenzsignalen (RSs) zu dem UE, wobei der eine oder die mehreren Antennenports aus den Antennenports des BS (eNB0) und der RRHs ausgewählt werden,
**dadurch gekennzeichnet, dass** das Auswählen auf der CSI-Rückkopplung basiert und dass das Verfahren weiterhin aufweist:
Bestimmen (1406), ob die Auswahl des einen oder der mehreren Antennenports aktualisiert werden sollen, basierend wenigstens teilweise auf einer Positionsänderung des UE in der logischen Zelle (1302; 1304; 1500) oder einer Mobilität des UE in der logischen Zelle (1302; 1304; 1500), wobei für das Bestimmen der Positionsänderung oder Mobilität des UE die Position des UE basierend auf Sondierungsreferenzsignalen (SRSs), die von dem UE gesendet werden und an verschiedenen RRHs empfangen werden, oder auf an das BS berichteten GPS (Global Positioning System)-Koordinaten des UE bestimmt wird.

2. Verfahren nach Anspruch 1, wobei die Bestimmung, ob die Auswahl des einen oder der mehreren Antennenports aktualisiert werden soll, basierend auf einer Nähe des UE zu einem oder mehreren der BS und der RRHs vorgenommen wird.

3. Verfahren nach Anspruch 1, wobei die Bestimmung, ob die Auswahl des einen oder der mehreren Antennenports aktualisiert werden soll, basierend wenigstens teilweise auf einer CSI-Rückkopplung oder der Qualität von an verschiedenen RHHs empfangenen SRSs vorgenommen wird.

4. Verfahren nach Anspruch 1, wobei die Bestimmung, ob die Auswahl des einen oder der mehreren Antennenports aktualisiert werden soll, basierend auf von den gesendeten RSs empfangenen Messungen vorgenommen wird.

5. Verfahren nach Anspruch 1, wobei die CSI-Rückkopplung eine Kanalqualitätsindikator (Channel Quality Indicator bzw. CQI)-Rückkopplung aufweist.

6. Verfahren nach Anspruch 1, wobei das RS ein zellenspezifisches RS, ein CRS und/oder ein CSI-RS ist.

7. Eine Vorrichtung (1400A) für drahtlose Kommunikationen in einer logischen Zelle (1302; 1304; 1500), die eine Basisstation bzw. BS (eNB0) und einen oder mehrere Remote Radio Heads bzw. RRHs, die unter der Steuerung der BS (eNB0) stehen und an verschiedenen Positionen über die logische Zelle verteilt sind, aufweist, wobei die Vorrichtung an dem BS vorgesehen ist und aufweist:
Mittel (1402A) zum Empfangen (1402) einer Kanalzustandsinformationen (Channel State Informationen bzw. CSI)-Rückkopplung von einem Benutzergerät (User Equipment bzw. UE),
Mittel (1404A) zum Auswählen (1404) eines oder mehrerer Antennenports für das Senden von Referenzsignalen (RSs) zu dem UE, wobei der eine oder die mehreren Antennenports aus den Antennenports des BS (eNB0) und der RRHs ausgewählt werden,
**dadurch gekennzeichnet, dass** die Mittel zum Auswählen konfiguriert sind zum Auswählen des einen oder der mehreren Antennenports basierend auf der CSI-Rückkopplung und dass die Vorrichtung weiterhin aufweist:
Mittel (1406A) zum Bestimmen (1406), ob die Auswahl des einen oder der mehreren Antennenports aktualisiert werden sollen, basierend wenigstens teilweise auf einer Positionsänderung des UE in der logischen Zelle (1302; 1304; 1500) oder einer Mobilität des UE in der logischen Zelle (1302; 1304; 1500), wobei für das Bestimmen der Positionsänderung oder Mobilität des UE die Position des UE basierend auf Sondierungsreferenzsignalen (SRSs), die von dem UE gesendet werden und an verschiedenen RRHs empfangen werden, oder auf an das BS berichteten GPS (Global Positioning System)-Koordinaten des UE bestimmt wird.

8. Vorrichtung nach Anspruch 7, wobei die Bestimmung, ob der eine oder die mehreren Antennenports aktualisiert werden sollen, basierend auf einer Nähe des UE zu einem oder mehreren der BS und der RRHs vorgenommen wird.

9. Vorrichtung nach Anspruch 7, wobei die Bestimmung, ob die Auswahl des einen oder der mehreren Antennenports aktualisiert werden soll, basierend wenigstens teilweise auf einer CSI-Rückkopplung oder der Qualität von an verschiedenen RHHs empfangenen SRSs vorgenommen wird.

10. Vorrichtung nach Anspruch 7, wobei die Bestimmung, ob die Auswahl des einen oder der mehreren Antennenports aktualisiert werden soll, basierend auf von den gesendeten RSs empfangenen Messungen vorgenommen wird.

11. Ein Computerprogrammprodukt für drahtlose Kommunikationen, das ein computerlesbares Medium mit darauf gespeicherten Befehlen aufweist, die bei einer Ausführung durch einen Prozessor einer Basisstation den Prozessor dazu veranlassen, das Verfahren gemäß den Ansprüchen 1-6 durchzuführen.

## Revendications

1. Un procédé (1400) destiné à des communications sans fil dans une cellule logique (1302; 1304; 1500) comprenant une station de base (eNBO), BS, et une ou plusieurs têtes radio distantes, RRH, sous le contrôle de la BS (eNB0) et réparties dans différents emplacements sur l'ensemble de la cellule logique, le procédé étant exécuté par la BS et comprenant :
la réception (1402) d'une rétroaction d'informations d'état de canal, CSI, à partir d'un équipement d'utilisateur, UE,
la sélection (1404) d'un ou de plusieurs ports d'antenne destinés à la transmission de signaux de référence, RS, à l'UE, où les un ou plusieurs ports d'antenne sont sélectionnés parmi des ports d'antenne de la BS (eNB0) et des RRH, **caractérisé en ce que** la sélection est basée sur la rétroaction de CSI, et **en ce que** le procédé comprend en outre :
la détermination (1406) s'il convient d'actualiser la sélection des un ou plusieurs ports d'antenne en fonction au moins en partie d'une modification de l'emplacement de l'UE dans la cellule logique (1302; 1304; 1500) ou d'une mobilité de l'UE dans la cellule logique (1302; 1304; 1500), où de façon à déterminer la modification de l'emplacement ou de la mobilité de l'UE, un emplacement de l'UE est déterminé en fonction de signaux de référence de sondage, SRS, transmis à partir de l'UE et reçus au niveau de différentes RRH ou de coordonnées d'un système de géopositionnement par satellite, GPS, de l'UE signalées à la BS.

2. Le procédé selon la Revendication 1, où la détermination s'il convient d'actualiser la sélection des un ou plusieurs ports d'antenne est effectuée en fonction d'une proximité de l'UE à un ou plusieurs éléments parmi la BS et les RRH

3. Le procédé selon la Revendication 1, où la détermination s'il convient d'actualiser la sélection des un ou plusieurs ports d'antenne est effectuée en fonction au moins en partie de la rétroaction de CSI ou d'une qualité de SRS reçus au niveau de différentes RRH

4. Le procédé selon la Revendication 1, où la détermination s'il convient d'actualiser la sélection des un ou plusieurs ports d'antenne est effectuée en fonction de mesures reçues à partir des RS transmis.

5. Le procédé selon la Revendication 1, où la rétroaction de CSI comprend une rétroaction d'indicateur de qualité de canal, CQI.

6. Le procédé selon la Revendication 1, où le RS est au moins un RS spécifique à une cellule, CRS, ou un CSI-RS.

7. Un appareil (1400A) destiné à des communications sans fil dans une cellule logique (1302; 1304; 1500) comprenant une station de base (eNBO), BS, et une ou plusieurs têtes radio distantes, RRH, sous le contrôle de la BS (eNB0) et réparties dans différents emplacements sur l'ensemble de la cellule logique, l'appareil étant au niveau de la BS et comprenant :
un moyen (1402A) de réception (1402) d'une rétroaction d'informations d'état de canal, CSI, à partir d'un équipement d'utilisateur, UE,
un moyen (1404A) de sélection (1404) d'un ou de plusieurs ports d'antenne destinés à la transmission de signaux de référence, RS, à l'UE, où les un ou plusieurs ports d'antenne sont sélectionnés parmi des ports d'antenne de la BS (eNB0) et des RRH, **caractérisé en ce que** le moyen de sélection est configuré de façon à sélectionner les un ou plusieurs ports d'antenne en fonction de la rétroaction de CSI, et **en ce que** l'appareil comprend en outre :
un moyen (1406A) de détermination (1406) s'il convient d'actualiser la sélection des un ou plusieurs ports d'antenne en fonction au moins en partie d'une modification de l'emplacement de l'UE dans la cellule logique (1302; 1304; 1500) ou d'une mobilité de l'UE dans la cellule logique (1302; 1304; 1500), où de façon à déterminer la modification de l'emplacement ou d'une mobilité de l'UE, un emplacement de l'UE est déterminé en fonction de signaux de référence de sondage, SRS, transmis à partir de l'UE et reçus au niveau de différentes RRH ou de coordonnées d'un système de géopositionnement par satellite, GPS, de l'UE signalées à la BS.

8. L'appareil selon la Revendication 7, où la détermination s'il convient d'actualiser la sélection des un ou plusieurs ports d'antenne est effectuée en fonction d'une proximité de l'UE d'un ou de plusieurs éléments parmi la BS et les RRH

9. L'appareil selon la Revendication 7, où la détermination s'il convient d'actualiser la sélection des un ou plusieurs ports d'antenne est effectuée en fonction au moins en partie de la rétroaction de CSI ou d'une qualité de SRS reçus au niveau de différentes RRH

10. L'appareil selon la Revendication 7, où la détermination s'il convient d'actualiser la sélection des un ou plusieurs ports d'antenne est effectuée en fonction de mesures reçues à partir des RS transmis.

11. Un produit de programme informatique destiné à des communications sans fil, comprenant un support lisible par ordinateur possédant des instructions conservées en mémoire sur celui-ci qui, lorsqu'elles sont exécutées par un processeur d'une station de base, amènent le processeur à exécuter l'un quelconque des procédés des Revendications 1 à 6.
